# EUROPÄISCHE PATENTSCHRIFT

(11) **EP 1 396 367 B1**
(45) Veröffentlichungstag und Bekanntmachung des Hinweises auf die Patenterteilung: **22.06.2005**
(21) Anmeldenummer: 03017405.6
(22) Anmeldetag: 31.07.2003
(51) Int. Cl.: B60K 5/12, B61C 9/00

(54) **Elastisches Lager für das verstellbare Befestigen eines Bauteils an einer tragenden Struktur**
Elastic support for adjustably mounting a component on a supporting structure
Support élastique pour fixer de façon réglable un composant sur une structure de support

(30) Priorität: 03.09.2002 DE 10240623
(43) Veröffentlichungstag der Anmeldung: 10.03.2004
(73) Patentinhaber: SIEMENS AKTIENGESELLSCHAFT, 80333 München (DE)
(72) Erfinder: Nolting, Gerhard, 44869 Bochum (DE); Wanczura, Stefan, 45665 Recklinghausen (DE)

(56) Entgegenhaltungen:
- CH-A- 671 066
- DE-A- 3 610 216
- GB-A- 953 677
- GB-A- 1 116 517

## Beschreibung

Die Erfindung betrifft ein elastisches Lager in Form eines Keillagers für das Befestigen eines Bauteils (z. B. eines Motors) an einer tragenden Struktur (z. B. einem Untergestell eines Schienenfahrzeuges), wobei das Lager einen Grundkörper, einen Druckkörper, ein zwischen diesen Körpern angeordnetes federndes Mittel und für das Verbinden des Grundkörpers mit der tragenden Struktur vorgesehene Schrauben aufweist.

Ein elastisches Lager mit den vorgenannten Merkmalen ist durch die DE 36 10 216 A1 bekannt. Dieses Lager ist mit dem Endbereich einer Traverse eines Bauteils (z. B. ein Motor-Getriebe-Aggregat) durch einen Tragbolzen verbunden, der den Druckkörper des Lagers durchdringt und in eine Buchse der Traverse eingreift. Der Grundkörper des Lagers ist gegenüber einer tragenden Struktur, hier einem Untergestell-Langträger eines Schienenfahrzeuges, abgestützt und durch Schrauben mit dieser Struktur verbunden. Ein solches elastisches Lager dient der schwingungstechnischen Entkoppelung zwischen dem in der Regel schweren Bauteil und der tragenden Struktur, wobei im Anwendungsfall eines Fahrzeuges der Fahrkomfort erhöht wird. Das elastische Lager überträgt neben den Gewichtskräften auch die im Fahrbetrieb aus den Beschleunigungs- und Bremsvorgängen resultierenden Kräfte durch die reibschlüssige Verbindung zwischen dem Grundkörper und der tragenden Struktur. Die bekannten elastischen Lager in Form von Keillagern sind jedoch nicht dafür konzipiert, in einschlägigen eisenbahntechnischen Vorschriften (UIC 566) definierte außergewöhnliche Lastfälle abzudecken, zu denen der sogenannte Auflaufstoß gehört. Um die bei einem solchen Auflaufstoß entstehenden besonders hohen Kräfte zu übertragen, werden zwischen dem Bauteil und der Tragstruktur entsprechend stabile Anschläge vorgesehen, die nachteilig einen höheren baulichen Aufwand verursachen. Weil für das Verbinden des schweren Bauteils mit der tragenden Struktur regelmäßig zumindest vier elastische Lager (zwei Traversen mit jeweils zwei Lagern) verwendet werden und nicht zu vermeidende Maßtoleranzen bestehen, ergibt sich in der Praxis ein ungünstig hoher Aufwand hinsichtlich der Montage. So können beispielsweise die für die Verbindungsschrauben erforderlichen Bohrungen in der tragenden Struktur häufig erst geschaffen werden, wenn das Bauteil in seine Montagestellung gebracht und ausgerichtet ist.

Durch das Dokument GB-A-953,677 ist es bekannt, Radsatzlager von Radsätzen durch Längslenker am Rahmen eines Drehgestelles anzuschließen. Hierbei ist das zum Radsatzlagergehäuse gerichtete Ende jedes Lenkers als Auge ausgebildet, das über eine Gummihülse und einen Exzenterbolzen zwischen zwei Lagerschilden des Radsatzlagergehäuses gehalten wird.

Der Erfindung liegt daher die Aufgabe zugrunde, ein elastisches Lager der gattungsgemäßen Art auf möglichst einfache, kostengünstige Weise so zu gestalten, dass neben einer guten schwingungstechnischen Entkoppelung alle auftretenden Kräfte, also auch besonders hohe Kräfte, zwischen dem Lager und der tragenden Struktur einwandfrei übertragen werden, wobei im Sinne einer leicht und schnell durchführbaren Montage ein Ausgleich von Maßtoleranzen erreichbar sein soll.

Diese Aufgabe wird erfindungsgemäß gelöst durch zwei exzentrisch ausgebildete Bolzen, die jeweils einerseits in eine Bohrung des Grundkörpers und andererseits in eine Bohrung der tragenden Struktur eingreifen.

Durch die Erfindung steht vorteilhaft ein elastisches Lager zur Verfügung, bei dem die wesentlichen Funktionen a) Schwingungsentkoppelung, b) Übertragung auch der in außergewöhnlichen Lastfällen auftretenden hohen Kräfte und c) Toleranzausgleich integriert sind. Damit verbunden sind eine Reduzierung von Gewicht und Kosten, eine gute Zugänglichkeit und eine kurze Montagezeit. Die bekannte reibschlüssige Kraftübertragung zwischen dem Lager und der tragenden Struktur ist durch den über die Exzenterbolzen geschaffenen Formschluss ersetzt, so dass früher notwendige separate Anschläge entfallen.

Vorteilhafte Ausgestaltungen der Erfindung sind in den Unteransprüchen angegeben.

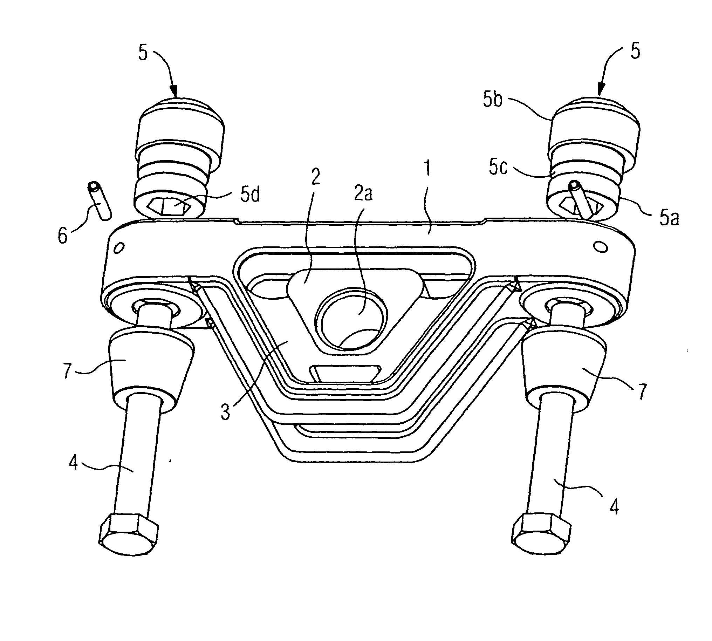

Im weiteren wird die Erfindung anhand eines Ausführungsbeispiels näher beschrieben, das in der Zeichnung dargestellt ist. Die Zeichnung zeigt ein elastisches Lager in Form eines Keillagers in perspektivischer Ansicht.

Das elastische Lager ist für das Befestigen eines Bauteils an einer tragenden Struktur vorgesehen. Bei diesem Bauteil handelt es sich beispielsweise um einen Motor mit Getriebe, eine Gruppe von Hilfsmaschinen, einen Kraftstoffbehälter oder einen Batteriekasten. Die tragende Struktur ist z. B. ein Untergestell eines Schienenfahrzeuges.

Wie dargestellt, gehören zum Keillager ein hier als Gehäuse ausgebildeter Grundkörper 1 aus vorzugsweise gegossenem Metall, ein Druckkörper 2 und ein zwischen den beiden Körpern 1 und 2 angeordnetes federndes Mittel 3, beispielsweise aus Gummi. Das Keillager ist mit dem zu befestigenden Bauteil durch einen Bolzen verbunden, der einerseits in einer Bohrung 2a des Druckkörpers 2 gehalten ist und andererseits in eine Buchse eingreift, die üblicherweise am Bauteil oder an einer mit dem Bauteil verbundenen Traverse angebracht ist. Der Grundkörper 1 hat im Bereich seiner beiden Längsenden jeweils eine Bohrung, die einen in Zeichnungsebene unteren, ersten Anschnitt 5a eines exzentrisch ausgebildeten Bolzens 5 aufnimmt. Jeder dieser Exzenterbolzen 5 ist durch eine Spannhülse 6, die mit einer Umfangsnute 5c zusammenwirkt, innerhalb der Bohrung des Grundkörpers 1 fixiert. Der zweite Abschnitt 5b des jeweiligen Exzenterbolzens 5 ragt aus dem Grundkörper 1 heraus.

Im Ausführungsbeispiel empfiehlt es sich, für die Montage des Bauteils mit den daran angebrachten Keillagern eine Hebevorrichtung einzusetzen, z. B. einen Hubwagen. Bei dem Hochfahren des Bauteils mittels der Hebevorrichtung tauchen jeweils der zweite Abschnitt 5c der Exzenterbolzen 5 formschlüssig in eine entsprechende Bohrung in der tragenden Struktur ein. Für einen Ausgleich eventueller Maßtoleranzen beinhalten die Exzenterbolzen 5 Angriffsflächen 5d, die ein Verdrehen der Bolzen 5 mit Hilfe eines entsprechenden Werkzeuges, beispielsweise eines Außensechskantschlüssels, möglichen. Die Montage des Bauteils wird durch das Anziehen von Verbindungsschrauben 4 abgeschlossen, die jeweils einen der Exzenterbolzen 5 durchdringen und gegenüber der tragenden Struktur gehaltert sind. Durch Dehnhülsen 7, die jeweils zwischen dem Kopf der Verbindungsschraube 4 und dem Grundkörper 1 angeordnet sind, wird eine für die Sicherheit der Verbindung günstige vergrößerte Dehnlänge der Schrauben 4 erreicht.

### Liste der Bezugszeichen

- 1: Grundkörper
- 2: Druckkörper
- 2a: Bohrung
- 3: federndes Mittel
- 4: Verbindungsschrauben
- 5: Exzenterbolzen
- 5a: erster Abschnitt
- 5b: zweiter Abschnitt
- 5c: Umfangsnute
- 5d: Angriffsfläche für ein Werkzeug
- 6: Spannhülse
- 7: Dehnhülse

## Patentansprüche

1. Elastisches Lager in Form eines Keillagers für das Befestigen eines Bauteils (z. B. eines Motors) an einer tragenden Struktur (z. B. einem Untergestell eines Schienenfahrzeuges), wobei das Lager einen Grundkörper (1), einen Druckkörper (2), ein zwischen diesen Körpern angeordnetes federndes Mittel (3) und für das Verbinden des Grundkörpers (1) mit der tragenden Struktur vorgesehene Schrauben (4) aufweist, **gekennzeichnet durch** zwei exzentrisch ausgebildete Bolzen (5), die jeweils einerseits in eine Bohrung des Grundkörpers (1) und andererseits in eine Bohrung der tragenden Struktur eingreifen.

2. Elastisches Lager nach Anspruch 1, **dadurch gekennzeichnet, dass** die Exzenterbolzen (5) jeweils durch eine Spannhülse (6) innerhalb der Bohrung des Grundkörpers (1) fixiert sind.

3. Elastisches Lager nach Anspruch 1 oder 2, **dadurch gekennzeichnet, dass** die Exzenterbolzen (5) jeweils eine Angriffsfläche (5d) beinhalten, die ein Verdrehen des Bolzens (5) mit Hilfe eines entsprechenden Werkzeuges, z. B. eines Außensechskantschlüssels, ermöglicht.

4. Elastisches Lager nach einem der Ansprüche 1 bis 3, **dadurch gekennzeichnet, dass** die Exzenterbolzen (5) jeweils von einer der Verbindungsschrauben (4) durchdrungen sind.

## Claims

1. Elastic support in the form of a wedge-shaped support for mounting a component (for example an engine) on a supporting structure (for example an underframe of a rail vehicle), the support having a basic body (1), a pressure body (2), a resilient means (3) arranged between these bodies and screws (4) provided for connecting the basic body (1) to the supporting structure, **characterized by** two bolts (5) which are formed eccentrically and in each case engage firstly in a bore of the basic body (1) and secondly in a bore of the supporting structure.

2. Elastic support according to Claim 1, **characterized in that** the eccentric bolts (5) are in each case fixed within the bore of the basic body (1) by means of a clamping sleeve (6).

3. Elastic support according to Claim 1 or 2, **characterized in that** the eccentric bolts (5) in each case contain a driving flat (5d) which makes it possible for the bolt (5) to be rotated with the aid of an appropriate tool, for example a spanner with a hexagon insert bit.

4. Elastic support according to one of Claims 1 to 3, **characterized in that** the eccentric bolts (5) are in each case penetrated by one of the connecting screws (4).

## Revendications

1. Support élastique sous la forme d'un support en V pour fixer un élément (par exemple un moteur) sur une structure porteuse (par exemple un châssis d'un véhicule ferroviaire), sachant que le support comporte un corps (1) de base, un corps (2) de pression, un moyen (3) à élasticité de ressort disposé entre ces corps, et des vis (4) prévues pour l'assemblage du corps (1) de base avec la structure porteuse, **caractérisé par** deux boulons (5) réalisés excentriquement, qui pénètrent chacun d'une part dans un perçage du corps (1) de base et d'autre part dans un perçage de la structure porteuse.

2. Support élastique suivant la revendication 1, **caractérisé en ce que** les boulons (5) excentriques sont chacun immobilisés par une douille (6) de serrage à l'intérieur du perçage du corps (1) de base.

3. Support élastique suivant la revendication 1 ou 2, **caractérisé en ce que** les boulons (5) excentriques comportent chacun une surface (5d) de prise qui permet de faire tourner le boulon (5) à l'aide d'un outil correspondant, par exemple une clé mâle hexagonale.

4. Support élastique suivant l'une des revendications 1 à 3, **caractérisé en ce que** les boulons (5) excentriques sont chacun traversés par une des vis (4) d'assemblage.
